# EUROPÄISCHE PATENTSCHRIFT

(11) **EP 2 723 583 B1**
(45) Veröffentlichungstag und Bekanntmachung des Hinweises auf die Patenterteilung: **22.04.2020**
(21) Anmeldenummer: 12734826.6
(22) Anmeldetag: 14.06.2012
(51) Int. Cl.: B60B 11/06, B60B 27/00, B60B 11/02

(54) **NABENANORDNUNG, INSBESONDERE FÜR ZWILLINGSRÄDER**
HUB ASSEMBLY, IN PARTICULAR FOR DUAL WHEELS
ENSEMBLE DE MOYEUX, EN PARTICULIER POUR ROUES JUMELÉES

(30) Priorität: 27.06.2011 DE 102011078132
(43) Veröffentlichungstag der Anmeldung: 30.04.2014
(60) Teilanmeldung: 15179922.8
(73) Patentinhaber: Kessler & Co. GmbH & Co. KG, 73453 Abtsgmünd (DE)
(72) Erfinder: BITTLINGMAIER, Günter, 73432 Ebnat (DE); BAUER, Thomas, 73433 Aalen (DE)
(74) Vertreter: Manitz Finsterwald Patent- und Rechtsanwaltspartnerschaft mbB
(86) Internationale Anmeldenummer: PCT/EP2012/061306
(87) Internationale Veröffentlichungsnummer: WO 2013/000723

(56) Entgegenhaltungen:
- DE-B- 1 012 532
- DE-B- 1 209 012
- US-A- 2 268 329
- US-A- 2 345 192

## Beschreibung

Die Erfindung steht im Zusammenhang mit Nabenanordnungen, insbesondere für Zwillingsräder, mit zwei relativ zueinander drehbaren Nabenteilen und zugeordneter Bremsanordnung.

Es ist allgemein bekannt und üblich, an Schwerstlastfahrzeugen, beispielsweise an Hubstaplern für große Schiffscontainer, Achsen mit Zwillingsrädern vorzusehen, um extreme Tragkräfte gewährleisten zu können. Dabei ist es erwünscht, die Zwillingsräder relativ zueinander drehbar anzuordnen, um bei Wendemanövern des Fahrzeuges unerwünschten Schlupf und damit verbundenen starken Verschleiß der Bereifung der Zwillingsräder zu vermeiden. Die US 7,757,795 B2 zeigt eine für derartige Zwillingsräder geeignete Nabenanordnung bei der die die beiden Zwillingsräder tragenden Radnabenteile auf einem (dritten) Zwischennabenteil drehgelagert sind, welches seinerseits den Eingang eines die Radnabenteile treibenden Differentialgetriebes bildet. Zu diesem Zweck sind auf einem axial mittleren Abschnitt des Zwischennabenteiles Zahnräder um zum Umfang des Zwischennabenteiles senkrechte Achsen drehbar angeordnet. Diese Zahnräder kämmen mit Verzahnungsringen an den einander zugewandten Axialenden der Radnabenteile, so dass die Radnabenteile relativ zum Zwischennabenteil nur in einander entgegengesetzten Richtungen drehbar sind. Das Zwischennabenteil wird über ein Planetengetriebe angetrieben bzw. mittels einer nassen Lamellenbremse abgebremst. Um dabei auf jedes Radnabenteil ein vorgegebenes Mindestantriebsmoment bzw. Mindestbremsmoment übertragen zu können, sind zwischen dem Zwischennabenteil und den Radnabenteilen jeweils reibungsbehaftete Gleitlager vorgesehen, darüber hinaus arbeitet auch die Differentialanordnung mit konstruktiv vorgegebener Reibung.

Gleichwohl ist diese bekannte Nabenanordnung bei Bremsmanöver immer dann problematisch, wenn die Zwillingsräder aufgrund von Fahrbahnunebenheiten deutlich unterschiedlich belastet werden und eine entsprechend unterschiedliche Traktion aufweisen. Entsprechendes gilt auch dann, wenn die Zwillingsräder über Fahrbahnabschnitte mit sehr unterschiedlichen Reibkoeffizienten rollen. In allen diesen Fällen kann es passieren, dass bei einem Bremsmanöver das Zwillingsrad mit guter Traktion weitestgehend ungebremst weiter rollt, während das Zwillingsrad mit schlechter Traktion mit zum ersteren Zwillingsrad entgegengesetzter Drehrichtung durchrutscht.

Eine konstruktiv und funktional ähnliche Nabenanordnung ist Gegenstand der US 2,267,362. Hier sind konstruktive Maßnahmen zur Hemmung der Differentialanordnung zwischen den Radnabenteilen vorgesehen. In diesem Zusammenhang wird ausgenutzt, dass Zahnräder der Differentialanordnung nach Art von Zahnradpumpen hydraulische Schmiermittel in der Differentialanordnung verlagern. Dabei müssen gemäß der US 2,267,362 durch konstruktive Maßnahmen erhöhte Drosselwiderstände überwunden werden, so dass das Zwischennabenteil beim Fahr- und Bremsbetrieb jeweils entsprechende Mindestmomente auf die Radnabenteile überträgt. Gleichwohl kann unter ungünstigen Bedingungen der Fall auftreten, dass die nutzbaren Bremsmomente nur das (vergleichsweise geringe) Maß der vorgenannten Mindestmomente besitzen.

Auch die EP 1 288 054 B1 zeigt den Antrieb der Radnabenteile von Zwillingsrädern über eine Differentialanordnung. Hier sind die Radnabenteile jeweils als Hohlrad eines Planetengetriebes mit an einem stationären Planetenträger drehgelagerten Planetenrädern ausgebildet. Die Planetenräder kämmen jeweils mit einem Sonnenrad, das seinerseits über eine der Ausgangswellen der Differentialanordnung angetrieben wird. Es werden keinerlei Maßnahmen zur Übertragung von Bremskräften auf die Radnabenteile beschrieben.

Die EP 1 145 894 B1 zeigt eine Zwillingsradanordnung, bei der die Radnabenteile miteinander kraftschlüssig kuppelbar sind und nur ein Radnabenteil unmittelbar angetrieben bzw. gebremst wird. Hier muss also bei Bremsmanövern auf problematischem Untergrund immer dafür gesorgt werden, dass die Radnaben miteinander gekuppelt werden, was technisch schwierig bzw. mit hohem baulichen Aufwand verbunden ist.

Die EP 1 162 082 B1 zeigt wiederum eine Zwillingsradanordnung, deren Radnabenteile über eine Differentialanordnung angetrieben werden. Dabei ist die Differentialanordnung mit einem eingangsseitigen Untersetzungsgetriebe kombiniert, um gegebenenfalls hohe Antriebsmomente auf die Ausgangsseiten der Differentialanordnung übertragen zu können. Es werden keinerlei Maßnahmen zur Erzwingung eines Gleichlaufs der Radnaben dargestellt.

Die US 2 268 329 zeigt eine Nabenanordnung für Zwillingsräder, denen jeweils eine Bremsanordnung zugeordnet ist, die gemeinsam mit der anderen Bremsanordnung betätigbar ist. Die Nabe des einen Zwillingsrades ist auf der Nabe des anderen Zwillingsrades mittels Gleitlager angeordnet.

Die DE 1012532 B zeigt eine Nabenanordnung für Zwillingsräder, die gemeinsam mittels einer Scheibenbremsanordnung abbremsbar sind, allerdings können die Bremsmomente unterschiedlich sein.

Deshalb ist es Aufgabe der Erfindung, bei einer Nabenanordnung der eingangs angegebenen Art mit absoluter Sicherheit zu gewährleisten, dass bei Betätigung der Bremsanordnung an beiden Nabenteilen vergleichbar große Bremsmomente wirksam werden.

Die Erfindung beruht auf dem allgemeinen Gedanken, die zur Betätigung der einen Bremsvorrichtung notwendigen Kräfte über die andere Bremsvorrichtung auf stationäre Teile abzutragen. Damit werden die beiden Nabenteile zwangsläufig gemeinsam mit vergleichbaren Momenten abgebremst.

Im Falle einer für Zwillingsräder vorgesehenen Nabenanordnung, bei der die Radnaben über eine Differentialanordnung angetrieben werden, kann die Erfindung auch dadurch verwirklicht werden, dass die eine Bremsvorrichtung einem Radnabenteil und die andere Bremsvorrichtung einem Zwischennabenteil der Differentialanordnung zugeordnet ist.

Im Übrigen kann zum Antrieb der Radnabenteile vorgesehen sein, lediglich ein Nabenteil direkt anzutreiben und das andere Nabenteil bei Bedarf mit diesem Nabenteil kraft- und/oder formschlüssig zu kuppeln.

Bezüglich weiterer vorteilhafter Merkmale wird auf die Ansprüche und die nachfolgende Erläuterung der Zeichnung verwiesen, anhand der eine besonders bevorzugte Ausführungsform der Erfindung näher beschrieben wird.

In der Zeichnung zeigt
- Fig. 1: einen Axialschnitt einer Ausführungsform der erfindungsgemäßen Nabenanordnung,
- Fig. 2: einen Axialschnitt einer ähnlichen Ausführungsform mit zusätzlich vorgesehener Möglichkeit, bei Einsatz der Nabenanordnung für Zwillingsräder diese zu kuppeln.

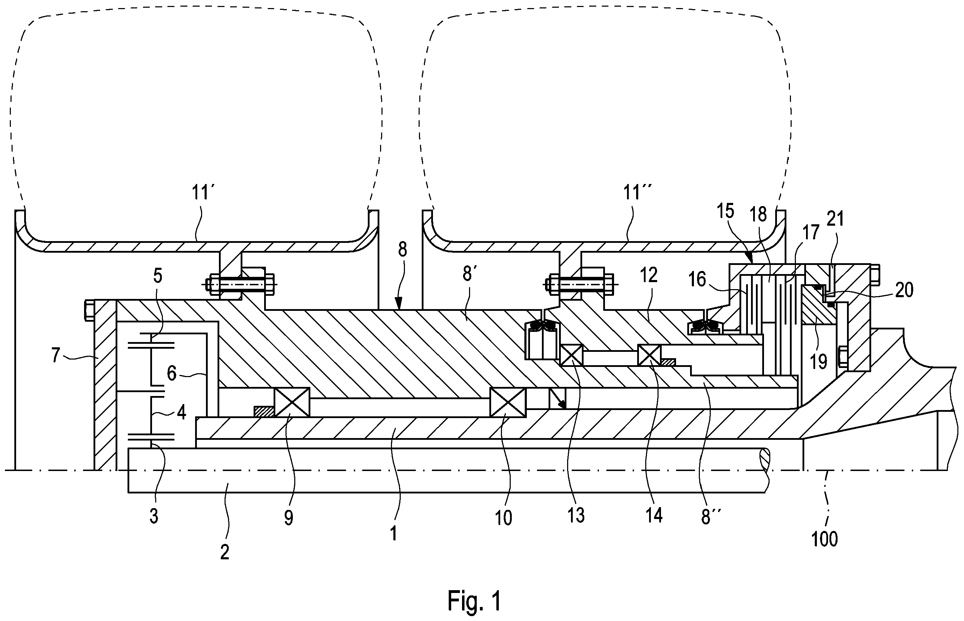

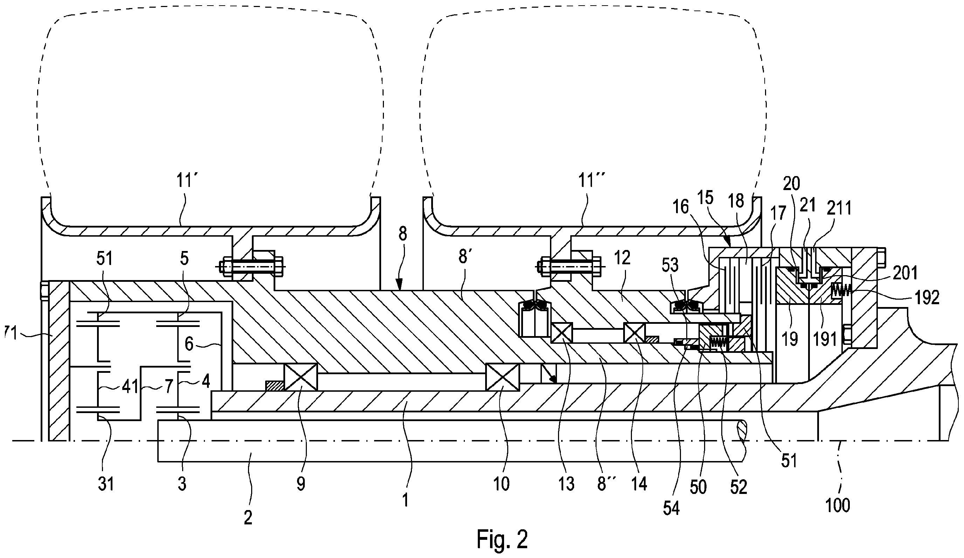

Die Schnittbilder der Fig. 1 und 2 zeigen jeweils "Halbschnitte", in denen nur der Bereich oberhalb einer zentralen Achse 100 dargestellt und der Bereich unterhalb dieser Achse 100 symmetrisch zum dargestellten Abschnitt ist.

Gemäß Fig. 1 besitzt die dargestellte Nabenanordnung ein Achsrohr 1, welches eine Antriebseingangswelle 2 aufnimmt. Diese trägt an ihrem in Figur 1 linken Ende ein formschlüssig mit der Welle 2 verbundenes Sonnenrad 3, das in grundsätzlich bekannter Weise mit Planetenrädern 4 kämmt, die in einem innenseitig verzahnten Hohlrad 5 umlaufen, welches mittels eines glockenartigen Trägers 6 drehfest mit dem Achsrohr 1 verbunden ist. Die Planetenräder 4 sind auf Achszapfen eines Planetenträgers 7 drehgelagert, der seinerseits mit einem Nabenteil 8 drehfest verbunden ist, welches auf Wälzlagern 9 und 10 drehgelagert ist, die auf dem Achsrohr 1 bzw. einem zylindrischen Fortsatz (nicht dargestellt) des auf dem Achsrohr 1 angeordneten Hohlradträgers 6 angeordnet sind.

Das Nabenteil 8 besitzt einen auf den Lagern 9 und 10 abgestützten Abschnitt 8' und einen über das Lager 10 axial hinausragenden Abschnitt 8". Dabei dient der linke Abschnitt 8' zur Halterung der Felge 11' eines äußeren Zwillingsrades. Der rechte Abschnitt 8" des Nabenteiles 8 trägt ein weiteres Nabenteil 12, welches auf dem Abschnitt 8" des Nabenteils 8 mittels dort angeordneter Wälzlager 13 und 14 drehgelagert ist. Das Nabenteil 12 besitzt einen gleichen Außendurchmesser wie das Nabenteil 8 im Bereich der Felge 11'. Dementsprechend kann eine gleichartige Felge 11" für ein inneres Zwillingsrad am Nabenteil 12 angeordnet werden.

Am in Figur 1 rechten Ende des Achsrohrs 1 ist ein damit fest verbundenes Bremsgehäuse 15 angeordnet, welches auf seiner den Nabenteilen 8 und 12 zugewandten Seite offen ist, derart, dass zwischen dem Außenumfang des Achsrohres 1 und dem Rand der Öffnung des Bremsgehäuses 15 eine Ringöffnung gebildet wird, durch die die Nabenteile 8 und 12 mit zylinderartigen axialen Endbereichen hindurchragen. Dabei ragt der axiale Endbereich des Nabenteiles 8 bzw. des Teiles 8" in axialer Richtung weiter in das Bremsgehäuse 15 hinein als der radial darüber angeordnete axiale Endbereich des Nabenteiles 12.

Radial zwischen dem Innenumfang des Bremsgehäuses 15 und dem Außenumfang des axialen Endbereiches des Nabenteiles 12 bzw. des axialen Endbereiches des Nabenteiles 8 sind jeweils Bremslamellenpakete 16 und 17 angeordnet, die jeweils aus bremsgehäuseseitigen Bremslamellen, welche in einer Innenumfangsverzahnung des Bremsgehäuses axial verschiebbar jedoch drehfest angeordnet sind, und nabenseitigen Bremslamellen bestehen, welche in analoger Weise an Außenumfangsverzahnungen der Axialenden der Nabenteile 8 bzw. 12 drehfest, jedoch axial verschiebbar angeordnet sind. Dabei sind in bekannter Weise jeweils bremsgehäuseseitige und nabenteilseitige Bremslamellen abwechselnd in axialer Nachbarschaft angeordnet, das heißt eine nabenteilseitige Bremslamelle ist jeweils axial zwischen zwei bremsgehäuseseitigen Bremslamellen angeordnet. Axial zwischen den Bremslamellenpaketen 16 und 17 ist an der bremsgehäuseseitigen Innenverzahnung eine Ringplatte 18 axial verschiebbar und drehfest angeordnet.

Innerhalb des Bremsgehäuses 15 ist des Weiteren ein axial verschiebbarer Ringkolben 19 angeordnet, dessen in Figur 1 rechtes Ende stufenförmig ausgebildet ist, derart, das im Bereich der Kolbenstufe zwischen der Bremsgehäusewandung und dem Ringkolben 19 eine Ringkammer 20 gebildet wird, die über eine Bohrung 21 mit Druckfluid steuerbar beaufschlagt werden kann. Damit wird der Ringkolben mit entsprechender Kraft gegen den Widerstand einer Rückstellfederanordnung (nicht dargestellt) axial gegen die Bremslamellenpakete 16 und 17 geschoben, wobei der auf das Bremslamellenpaket 17 ausgeübte axiale Druck des Ringkolbens 19 über die axial verschiebbare Ringplatte 18 auf das Bremslamellenpaket 16 und nachfolgend auf das stationäre Bremsgehäuse 15 abgetragen wird. Im Ergebnis werden damit beide Bremslamellenpakete 16 und 17 bremswirksam, so dass beide Nabenteile 8 und 12 mit den darauf angeordneten Zwillingsrädern 11' bzw. 11" simultan abgebremst werden.

Die Ausführungsform der Fig. 2 unterscheidet sich von der Ausführungsform der Fig. 1 zunächst dadurch, dass die Antriebseingangswelle 2 und das Nabenteil 8 über ein zweistufiges Planetengetriebe miteinander antriebsverbunden sind. Die Antriebseingangswelle 2 trägt wiederum ein mit ihr drehfest verbundenes Sonnenrad 3, welches mit Planetenrädern 4 kämmt, die ihrerseits in einem innenverzahnten Hohlrad 5 umlaufen. Die Planetenräder 4 sind wiederum auf Achszapfen des Planetenträgers 7 drehgelagert. Dieser Planetenträger 7 ist drehfest mit einem weiteren Sonnenrad 31 verbunden, welches mit Planetenräder 41 kämmt, die in einem innenverzahnten Hohlrad 51 umlaufen, welches ebenso wie das Hohlrad 5 über den glockenförmigen Träger 6 stationär am Achsrohr 1 gehaltert ist. Die Hohlräder 5 und 51 bilden in der Regel ein einziges Hohlrad, welches eine entsprechende axiale Breite aufweist und dementsprechend mit einem in der Zeichnung rechten Axialabschnitt mit den Planetenrädern 4 und mit einem in der Zeichnung linken Axialabschnitt mit den Planetenräder 41 zusammenwirkt. Die Planetenräder 41 sind auf Achszapfen eines Planetenträgers 71 drehgelagert, der seinerseits drehfest mit dem Nabenteil 8 verbunden ist.

Innerhalb des Bremsgehäuses 15 sind ein erster und ein zweiter Ringkolben 19 und 191 angeordnet, wobei der Ringkolben 19 wiederum durch Druckbeaufschlagung der Ringkammer 20 axial gegen die Bremslamellenpakete 16 und 17 geschoben werden kann, so dass die Nabenteile 8 und 12 zwangsläufig simultan gebremst werden. Der weitere Ringkolben 191 wird durch Federn 192 gegen die zugewandte Stirnseite des Ringkolbens 19 geschoben, derart, dass die vorgenannten Bremslamellenpakete 16 und 17 wiederum axial zusammengepresst und dadurch bremswirksam werden. Durch Druckbeaufschlagung einer Ringkammer 201, die über eine Bohrung 211 mit Druckfluid beaufschlagt werden kann, kann der Ringkolben 191 gegen die Kraft von Federn 192 nach rechts verschoben werden, so dass der Ringkolben 19 vom Ringkolben 191 entlastet wird und die Bremslamellenpakete 16 und 17 nur noch dann bremswirksam in Axialrichtung zusammenpressen kann, wenn die dem Ringkolben 19 zugeordnete Ringkammer 20 über die Bohrung 21 mit Druckfluid beaufschlagt wird. Durch die dargestellte Doppelkolbenanordnung 19, 191 kann also einerseits eine automatische Feststellbremse gewährleistet werden, wenn die Ringkammer 201 drucklos ist und der Ringkolben 191 durch die Federn 192 axial gegen den Ringkolben 19 drückt. Beim Fahrbetrieb wird die Ringkammer 201 mit Druck beaufschlagt, so dass der Ringkolben 191 axial vom Ringkolben 19 abgerückt bzw. beabstandet gehalten wird und die Bremslamellenpakete 16 und 17 nur noch dann bremswirksam werden, wenn die dem Ringkolben 19 zugeordnete Ringkammer 20 mit Druck beaufschlagt wird.

Im Übrigen ist bei der Ausführungsform der Fig. 2 die Möglichkeit gegeben, die Nabenteile 8 und 12 miteinander formschlüssig zu kuppeln. Dazu ist am Nabenteil 8 ein Klauenring 50 axial verschiebbar, jedoch drehfest angeordnet, und das Nabenteil 12 ist fest mit einem Klauenring 51 verbunden. Diese Klauenringe sind einander mit stirnseitig angeordneten Klauen zugewandt. Der Klauenring 50 kann gegen die Kraft einer Rückstellfederung 52 axial mittels eines Ringkolbens 53 gegen den Klauenring 51 geschoben werden, so dass die Klauen der beiden Ringe 50 und 51 in Eingriff gelangen. Der Ringkolben 53 ist auf seiner vom Klauenring 50 abgewandten Seite als Stufenkolben ausgebildet und begrenzt zusammen mit einer entsprechend stufenförmigen Außenumfangsfläche am Nabenteil 8 einen Ringraum 54, der über eine nicht dargestellte Bohrung im Nabenteil 8 oder eine ebenfalls nicht dargestellte Druckdurchführung im Achsgehäuse mit einem Druckfluid beaufschlagt bzw. vom Druckfluid entlastet werden kann, d.h. bei Druckbeaufschlagung des Ringraumes 54 wird der Klauenring 50 zum Eingriff mit dem Klauenring 51 gebracht, so dass die beiden Klauenringe 50 und 51 und dementsprechend die Nabenteile 8 und 12 miteinander formschlüssig gekuppelt werden. Bei Druckentlastung des Ringraumes 54 schiebt die Rückstellfederung 52 den Klauenring 50 wieder in die dargestellte linke Endlage, in der die Klauenringe 50 und 51 voneinander entkuppelt sind und die Nabenteile 8 und 12 relativ zueinander drehen können. Bei Bedarf können also die Nabenteile 8 und 12 und dementsprechend die Felgen 11' und 11" einer Zwillingsradanordnung simultan im Gleichlauf angetrieben werden.

Abweichend von der Darstellung der Fig. 1 und 2 könnte die Nabe 12 statt über die Wälzlager 13 und 14 auch über die Gleitlager auf der Nabe 8 drehgelagert sein, so dass die beiden Naben 8 und 12 immer durch einen von der Reibung der Gleitlager vorgegebenen Kraftschluss miteinander gekuppelt bleiben.

Bezüglich der Montage der Felgen 11' und 11" an den Naben 8 und 12 wird auf Anspruch 10 verwiesen, der eine vorteilhafte Möglichkeit aufzeigt, Felgen 11' und 11" von Zwillingsrädern an axial benachbarten Naben 8, 12 mit gleichen Außendurchmessern anzuordnen.

## Patentansprüche

1. Nabenanordnung für Zwillingsräder mit zwei relativ zueinander drehbaren Naben (8,12), denen jeweils eine Bremsanordnung (16,17) zugeordnet ist, die gemeinsam mit der jeweils anderen Bremsanordnung betätigbar ist,
**dadurch gekennzeichnet,**
**dass** die zwei Naben (8,12) mit zueinander gleichachsigen axialen Endabschnitten axial in ein Bremsgehäuse (15) hineinragen, wobei radial zwischen dem einen Endabschnitt und dem Innenumfang des Bremsgehäuses (15) ein erstes Bremslamellenpaket (17) und radial zwischen dem anderen Endabschnitt und dem Innenumfang des Bremsgehäuses (15) ein zum ersten Bremslamellenpaket axial benachbartes zweites Bremslamellenpaket (16) angeordnet ist, und dass beide Bremslamellenpakete (16,17) mittels eines bremsgehäuseseitigen Druckaggregates (20,21,22) in axialer Richtung gegen eine Widerlagerwand des Bremsgehäuses (15) anschiebbar sind.

2. Nabenanordnung nach Anspruch 1,
**dadurch gekennzeichnet,**
**dass** eine Nabe (8) der Nabenanordnung (8, 12) als Getriebenabe ausgebildet und über ein ein- oder mehrstufiges, insbesondere zweistufiges, Planetengetriebe antreibbar ist.

3. Nabenanordnung nach Anspruch 1,
**dadurch gekennzeichnet,**
**dass** als Druckaggregat zur Bremsbetätigung ein fluidisches Zwei-KolbenAggregat (19, 191) vorgesehen ist, wobei ein Kolben (19) bei fluidischer Druckbeaufschlagung die Lamellenpakete (16, 17) axial zusammenpresst bzw. gegen die Widerlagerwand des Bremsgehäuses (15) schiebt, und wobei ein weiterer Kolben (191) durch Federn (192) axial gegen die Lamellenpakete (16, 17) gespannt wird und bei fluidischer Druckbeaufschlagung gegen die Kraft der Federn (192) von den Lamellenpaketen (16, 17) axial abrückbar ist.

4. Nabenanordnung nach Anspruch 3,
**dadurch gekennzeichnet,**
**dass** der weitere Kolben (191) axial benachbart zum einen Kolben (19) angeordnet ist und durch die Federn (192) gegen diesen Kolben (19) gespannt wird, welcher axial verschiebbar angeordnet ist.

5. Nabenanordnung nach einem der Ansprüche 1 bis 4,
**dadurch gekennzeichnet,**
**dass** zur Befestigung von Zwillingsrädern an den zugeordneten Naben (8, 12) jeweils in einer Radialebene nach radial außen vorspringende, in Umfangsrichtung voneinander beabstandete lappenartige Flansche angeordnet sind, und dass an den Felgen (11', 11") innenumfangsseitig dazu im wesentlichen komplementäre, nach radial einwärts gerichtete lappenartige Flansche vorgesehen sind, derart, dass einerseits die Felgen (11', 11") in zur Nabenachse zentrischer Lage bei entsprechender Drehstellung axial über die Radialebene hinweg bewegbar sind und andererseits die nabenseitigen und felgenseitigen Flansche bei passender Drehstellung der Felge zu deren Befestigung an der jeweiligen Nabe aufeinander auflegbar sind.

6. Nabenanordnung nach einem der Ansprüche 1 bis 5,
**dadurch gekennzeichnet,**
**dass** eine Nabe (12) der Nabenanordnung auf bzw. an der anderen Nabe (8) drehgelagert ist.

7. Nabenanordnung nach Anspruch 6,
**dadurch gekennzeichnet,**
**dass** die eine Nabe (12) auf der anderen Nabe (8) mittels Gleitlager angeordnet ist.

## Claims

1. A hub arrangement for twin wheels comprising two hubs (8, 12) which are rotatable relative to one another and which are each assigned a braking arrangement (16, 17) which is actuable jointly with the respective other braking arrangement,
**characterized in that**
axial end sections of the two hubs (8, 12) which are coaxial with respect to one another axially project into a brake housing (15), with a first brake disc pack (17) being arranged radially between the one end section and an inner circumference of the brake housing (15), and with a second brake disc pack (16) which is axially adjacent to the first brake disc pack being arranged radially between the other end section and the inner circumference of the brake housing (15); and **in that** both brake disc packs (16, 17) can be shifted in an axial direction against an abutment wall of the brake housing (15) by means of a pressure unit (20, 21, 22) at the brake housing side.

2. A hub arrangement in accordance with claim 1,
**characterized in that**
one hub (8) of the hub arrangement (8, 12) is configured as a gear hub and is driveable via a single-stage or multi-stage, in particular two-stage, planetary gear.

3. A hub arrangement in accordance with claim 1,
**characterized in that**
a fluidic two-piston unit (19, 191) is provided as the pressure unit for brake actuation, with a piston (19), when fluidically acted on by pressure, axially compressing the disc packs (16, 17) or shifting them against the abutment wall of the brake housing (15), and with a further piston (191) being axially tensioned against the disc packs (16, 17) by springs (192) and, when fluidically acted on by pressure, being axially movable away from the disc packs (16, 17) against a force of the springs (192).

4. A hub arrangement in accordance with claim 3,
**characterized in that**
the further piston (191) is arranged axially adjacent to the one piston (19) and is tensioned by the springs (192) against this piston (19) which is arranged axially displaceably.

5. A hub arrangement in accordance with any one of the claims 1 to 4,
**characterized in that**,
for the fastening of twin wheels, lobe-like flanges which each project radially outwardly in a radial plane and which are spaced apart from one another in a circumferential direction are arranged at the associated hubs (8, 12); and **in that** lobe-like flanges which are substantially complementary to said flanges at the hub side and which are directed radially inwardly are provided at the rims (11', 11") at an inner circumferential side such that, on the one hand, the rims (11', 11") in a central position with respect to a hub axis can, on a corresponding rotary position, be moved axially beyond the radial plane and, on the other hand, the flanges at the hub side and the flanges at the rim side can, on a suitable rotary position of the rim, be placed onto one another for the fastening of said rim to the respective hub.

6. A hub arrangement in accordance with any one of the claims 1 to 5,
**characterized in that**
one hub (12) of the hub arrangement is rotatably mounted on or at the other hub (8).

7. A hub arrangement in accordance with claim 6,
**characterized in that**
the one hub (12) is arranged on the other hub (8) by means of slide bearings.

## Revendications

1. Ensemble de moyeux pour roues jumelées, comportant deux moyeux (8, 12) rotatifs l'un par rapport à l'autre, à chacun desquels est associé un dispositif de freinage (16, 17) qui peut être actionné conjointement avec l'autre dispositif de freinage respectif,
**caractérisé en ce que**
les deux moyeux (8, 12) pénètrent axialement dans un carter de frein (15) par des portions d'extrémité axiales coaxiales l'une par rapport à l'autre, un premier paquet de lamelles de frein (17) étant disposé radialement entre une portion d'extrémité et la circonférence intérieure du carter de frein (15), et un deuxième paquet de lamelles de frein (16) étant disposé radialement entre l'autre portion d'extrémité et la circonférence intérieure du carter de frein (15) en étant axialement adjacent au premier paquet de lamelles de frein, et **en ce que**
les deux paquets de lamelles de frein (16, 17) peuvent être poussés dans la direction axiale contre une paroi d'appui du carter de frein (15) au moyen d'une unité de pression (20, 21, 22) côté carter de frein.

2. Ensemble de moyeux selon la revendication 1,
**caractérisé en ce que**
l'un (8) des moyeux de l'ensemble de moyeux (8, 12) est réalisé sous forme de moyeu d'engrenage et peut être entraîné par un engrenage à planétaires à un étage ou à plusieurs étages, en particulier à deux étages.

3. Ensemble de moyeux selon la revendication 1,
**caractérisé en ce que**
une unité fluidique à deux pistons (19, 191) est prévue à titre d'unité de pression pour l'actionnement du frein, et un piston (16), lorsqu'il est soumis à une pression fluidique, presse les paquets de lamelles (16, 17) axialement l'un contre l'autre ou les pousse contre la paroi d'appui du carter de frein (15), et un autre piston (191) est serré axialement contre les paquets de lamelles (16, 17) par des ressorts (192) et peut être désengagé axialement des paquets de lamelles (16, 17) à l'encontre de la force des ressorts (192) lorsqu'il est soumis à une pression fluidique.

4. Ensemble de moyeux selon la revendication 3,
**caractérisé en ce que**
l'autre piston (191) est disposé axialement au voisinage dudit piston (19) et est serré par les ressorts (192) contre ledit piston (19) qui est disposé de manière à pouvoir se déplacer axialement.

5. Ensemble de moyeux selon l'une des revendications 1 à 4,
**caractérisé en ce que**
pour la fixation de roues jumelées aux moyeux associés (8, 12), il est prévu des flasques en forme de pattes faisant saillie radialement vers l'extérieur dans un plan radial respectif et espacés les uns des autres dans la direction circonférentielle, et sur les jantes (11', 11"), sur le côté circonférentiel intérieur, sont prévus des flasques en forme de pattes dirigés radialement vers l'intérieur qui sont essentiellement complémentaires auxdits flasques, de telle sorte que, d'une part, les jantes (11', 11") peuvent être déplacées axialement au-delà du plan radial, dans une position centrée par rapport à l'axe de moyeu, lors d'une position de rotation correspondante et, d'autre part, les flasques côté moyeu et côté jante peuvent être placés les uns sur les autres lors d'une position de rotation appropriée de la jante pour la fixer au moyeu respectif.

6. Ensemble de moyeux selon l'une des revendications 1 à 5,
**caractérisé en ce que**
l'un (12) des moyeux de l'ensemble de moyeux est monté de manière rotative sur ou à l'autre moyeu (8).

7. Ensemble de moyeux selon la revendication 6,
**caractérisé en ce que**
l'un (12) des moyeux est monté sur l'autre moyeu (8) au moyen de paliers coulissants.
